# EUROPÄISCHE PATENTSCHRIFT

(11) **EP 2 205 933 B1**
(45) Veröffentlichungstag und Bekanntmachung des Hinweises auf die Patenterteilung: **03.08.2011**
(21) Anmeldenummer: 08842142.5
(22) Anmeldetag: 23.10.2008
(51) Int. Cl.: G01B 11/10, G01N 21/952

(54) **VORRICHTUNG ZUM OPTISCHEN VERMESSEN UND/ODER PRÜFEN VON LÄNGLICHEN PRODUKTEN**
DEVICE FOR OPTICALLY MEASURING AND/OR TESTING OBLONG PRODUCTS
DISPOSITIF DE MESURE ET/OU DE CONTRÔLE OPTIQUE DE PRODUITS OBLONGS

(30) Priorität: 23.10.2007 EP 07020721
(43) Veröffentlichungstag der Anmeldung: 14.07.2010
(73) Patentinhaber: Zumbach Electronic Ag, 2552 Orpund (CH)
(72) Erfinder: KÄSER, Beda, CH-2555 Brügg (CH); BERARD, Daniel, CH-2556 Scheuren (CH)
(74) Vertreter: Köster, Hajo
(86) Internationale Anmeldenummer: PCT/EP2008/008970
(87) Internationale Veröffentlichungsnummer: WO 2009/053071

(56) Entgegenhaltungen:
- EP-A- 0 903 428
- FR-A- 2 595 814
- JP-A- 7 311 161
- JP-A- 2001 337 046
- TAKESA KAZUHIKO ET AL: "MEASUREMENT OF DIAMETER USING CHARGE COUPLED DEVICE (CCD)" 1984, CIRP ANNALS 1984 TECHNISCHE RUNDSCHAU, BERNE, SWITZ, VOL. 33, NR. 1, PAGE(S) 377 - 381 , XP002468997 das ganze Dokument

## Beschreibung

Die Erfindung betrifft eine Vorrichtung zum optischen Vermessen und/oder Prüfen von in ihrer Längsrichtung vorwärts bewegten Längsprodukten mit mehreren Kameras, die zur Scharfstellung der Abbildung in Richtung auf die Oberfläche des Längsprodukts verschiebbar sind,und ein entsprechendes Verfahren.

Es ist bereits bekannt, Geometrien und insbesondere die Geometrie von in Längsrichtung vorwärts bewegten Längsprodukten optisch präzise zu vermessen und/oder Fehlstellen an derartigen Produkten zu detektieren und/oder zu vermessen. Eine Bedingung für eine derartige präzise Messung besteht darin, dass die Abbildungsschärfe für die bei der Vermessung eingesetzte Kamera bestmöglich eingestellt sein muss. Ferner müssen die Verzeichnung minimal und der Abbildungsmaßstab genau bekannt sein.

Wird nun ein und dasselbe Messsystem für verschieden geformte und/oder dimensionierte Produkte und damit für unterschiedliche Distanzen von der Kamera zur Messebene, beispielsweise zur Oberfläche der zu vermessenden Struktur, eingesetzt, dann können die oben beschriebenen Anforderungen nur schwer erfüllt werden.

Es sind bereits Vorrichtungen der hier in Rede stehenden Art mit Autofokus-Optiken bekannt, mit denen sich die erforderliche Schärfe problemlos rasch und genau einstellen lässt. Allerdings führt die erforderliche Verstellung der optischen Elemente auch dazu, dass sich der Abbildungsmaßstab entsprechend verändert, wodurch eine präzise Vermessung negativ beeinflusst wird.

Um eine genaue Messung vornehmen zu können, muss bei den Vorrichtungen des Standes der Technik mit Autofokus-Optik für jede Distanz der Kamera zum zu vermessenden Objekt beziehungsweise Produkt eine neue Eichung vorgenommen werden.

Außerdem ist es für eine präzise Vermessung erforderlich, die Verzeichnung des Abbildes durch Objektivfehler zu berücksichtigen. Diese Fehler sind für ein optisches System bekanntermaßen bei verschiedenen Einstellung nicht konstant. Somit ist auch das Ausmaß der Verzeichnung abhängig von der jeweiligen Fokuseinstellung.

Dies wiederum hat dann zur Folge, dass die Korrekturalgorithmen zur Kompensation der Verzeichnungsfehler nur für eine bestimmte Fokusstellung gültig sind. Entsprechend müsste bei einem solchen System für jede Fokusstellung zusätzlich zum Abbildungsmaßstab auch ein zugehöriger Korrekturdatensatz zur Kompensation der Verzeichnung ermittelt und hinterlegt werden. Dies nimmt sehr viel Zeit in Anspruch und ist entsprechend kostspielig.

Die JP-A-7 311 161 beschreibt eine Vorrichtung zum optischen Vermessen und/oder Prüfen von in ihrer Längsrichtung vorwärts bewegten Längsprodukten mehreren Festfokuskameras mit Scharfstellung der Abbildung, wobei die Kameras zur Scharfstellung der Abbildung gemeinsam und gleichzeitig in Richtung auf die Oberfläche des Längsproduktes verschiebbar sind.

Aus der JP-A-2001 337 046 ist ebenfalls eine Vorrichtung zum optischen Vermessen und/oder Prüfen von in ihrer Längsrichtung vorwärtsbewegten Längsprodukten mit mehreren Kameras mit Scharfstellung der Abbildung bekannt. Bei dieser Vorrichtung sind die Kameras auf einem Kreis angeordnet.

Aufgabe der vorliegenden Erfindung ist es, eine einfache und kostengünstige gattungsgemäße Vorrichtung mit Scharfstellung der Abbildung bereit zu stellen. Aufgabe der vorliegenden Erfindung ist es ferner ein kostengünstiges und einfaches Verfahren zum optischen Vermessen und/oder Prüfen der genannten Art bereit zu stellen.

Gelöst wird diese Aufgabe durch die Lehre der unabhängigen Ansprüche.

Bei der erfindungsgemäßen Vorrichtung werden mehrere Kameras mit fixem Fokus eingesetzt, die mittels nur einer Vorrichtung gemeinsam und gleichzeitig um die gleiche Wegstrecke verschoben werden können.

Bei der erfindungsgemäßen Vorrichtung werden somit alle Kameras in Richtung auf die Oberfläche und insbesondere in senkrechter Richtung auf die Oberfläche des zu vermessende Längsproduktes verschoben beziehungsweise verfahren. Die Kameras werden dabei natürlich zweckmäßigerweise auf den optimalen Abstand zu der zu vermessenden Objekt- beziehungsweise Produktoberfläche verschoben.

Die Scharfstellung der Abbildung in den Kameras wird daher nicht durch ein Verstellen der Optik (Autofokus) bewerkstelligt. Vielmehr kann eine kostengünstige und einfach aufgebaute und damit über eine lange Standzeit verfügende Kamera mit Standardoptik zur Messung eingesetzt werden. Eine derartige Kamera besitzt einen fixen Fokus. Die mit Hilfe dieser Kamera vorgenommenen Messungen können mit einer eindeutigen Verzeichnungskorrektur versehen werden.

Die Vorteile der erfindungsgemäßen Vorrichtung sind daher insbesondere:
- Der Vergrößerungsmaßstab bleibt absolut konstant,
- die fest eingeeichte Verzeichniskorrektur ermöglicht für jede Einstellung optimale Messbedingungen und
- dies führt zu einer höchsten Wiederholbarkeit und Genauigkeit der durchgeführten Messungen.

Die oben aufgeführten Vorteile kommen dadurch zum Tragen, dass mehrere Kameras für die durchzuführenden Messaufgaben eingesetzt werden. Die erfindungsgemäße Vorrichtung findet dabei Einsatz für runde Längsprodukte, beispielsweise Kabel, Rohre und Profile, die allseitig vermessen werden müssen.

Die Kameras der erfindungsgemäßen Vorrichtung sind in einer zur Längsrichtung senkrechten Ebene sowie um die Längsrichtung verteilt, insbesondere gleichmäßig verteilt, angeordnet. Die Längsrichtung stellt somit eine Senkrechte zu dieser Ebene dar.

Die Kameras sind derart in dieser Ebene um die Längsrichtung verteilt angeordnet, dass sie einen gleichen Abstand zu dem zu vermessenden Längsprodukt besitzen. Ein derartiges Längsprodukt kann im übrigen auch als Langprodukt bezeichnet werden.

Vorzugsweise sind die Kameras auf einem Kreis angeordnet, der um die Längsrichtung des zu vermessenden beziehungsweise bewegten, runden Längsproduktes umläuft. Die durch diesen Kreis gebildete Ebene verläuft senkrecht zur Längsrichtung bzw. Längsachse des Längsproduktes. Der Mittelpunkt des Kreises fällt dabei mit dem Zentrum (liegt in der genannten Ebene) der Vorrichtung und, sofern sich das zu vermessende Längsprodukt in der korrekten Lage befindet, mit der Längsachse des in Längsrichtung vorwärtsbewegten Längsproduktes zusammen. Der Kreisdurchmesser hängt davon ab, wie weit die Kameras zum Zentrum verschoben sind. Die Kameras sind in diesem Falle in Radialrichtung verschiebbar bzw. hin- und herschiebbar.

Nach einer weiterhin bevorzugten Ausführungsform sind die Kameras dabei gleichmäßig verteilt auf dem Kreis (genauer: auf dem Kreisumfang) angeordnet. Diese Ausführungsform ist insbesondere für die oben beschriebenen runden Produkte geeignet. Eine derartige Vorrichtung dient zur Oberflächenfehlervermessung der runden Produkte.

Sollen Produkte mit unrundem Querschnitt vermessen werden und sind die Kameras auf einem Kreis angeordnet, kann es zweckmäßig sein, die Kameras derartig aus zu gestalten, das sie zusätzlich auch noch einzeln verschoben werden können.

Es versteht sich von selbst, dass die Kameras in der gewählten Verschiebeposition ortsfest fixiert werden können.

Sollen unrunde Längsprodukte, beispielsweise Profile, vermessen werden, dann können die Kameras alternativ auch auf beispielsweise einem Oval oder einer anderen geometrischen, in sich geschlossenen Figur angeordnet sein, die auf der genannten senkrechten Ebene liegt.

Weiterhin bevorzugt sind die Kameras auf einer gemeinsamen Halterichtung verschiebbar montiert, vorzugsweise auf einer planen Fläche der gemeinsamen Halteeinrichtung, wobei die Fläche senkrecht zur Längsachse der Längsrichtung angeordnet ist.

Bei dem erfindungsgemäßen Verfahren zum optischen Vermessen und/oder Prüfen von in ihrer Längsrichtung vorwärts bewegten Längsprodukten werden mehrere wie oben beschriebene Kameras auf denjenigen Abstand zu der Oberfläche des zu vermessenden Längsproduktes in Richtung auf die Oberfläche des Längsproduktes verschoben, bei dem das Längsprodukt in den Kameras scharf abgebildet wird. Dies erfolgt natürlich vor der eigentlichen optischen Vermessung und/oder Prüfung. Anschließend wird dann die optische Vermessung beziehungsweise Prüfung durchgeführt.

Somit werden bei diesem Verfahren alle Kameras gemeinsam und gleichzeitig um die gleiche Wegstreckung in Richtung auf die Oberfläche des Längsprodukts verschoben.

Wenn im Rahmen der vorliegende Unterlagen von einem Verschieben oder Verfahren in Richtung auf die Oberfläche die Rede ist, dann kann diese Bewegung zur Oberfläche hin oder von der Oberfläche weg erfolgen, je nachdem ob die Kameras näher an das Längsprodukt herangebracht oder davon entfernt werden muss/müssen. Analoges gilt für das Verschieben oder Verfahren in Radialrichtung.

Die Erfindung wird im Folgenden anhand einer bevorzugten Vorrichtung für die Oberflächenfehlervermessung an Kabeln, Rohren und Profilen beschrieben. Eine derartige Vorrichtung ist in den nachfolgenden Zeichnungen nicht maßstabsgetreu sowie teilweise schematisch näher erläutert. In den Zeichnungen zeigen:
- Figur 1: eine perspektivische Darstellung einer erfindungsgemäßen Vorrichtung mit drei Kameras
- Figur 2: eine Aufsicht auf die in Figur 1 gezeigte Vorrichtung in Richtung der Längsrichtung des zu vermessenden Längsproduktes, bei dem es sich hier um ein Rohr handelt,
- Figur 3: eine der Figur 2 analoge Ansicht,
- Figur 4a: die optischen Verhältnisse in schematischer Darstellung für eine konventionelle Autofokus-Optik, gemäß dem Stand der Technik,

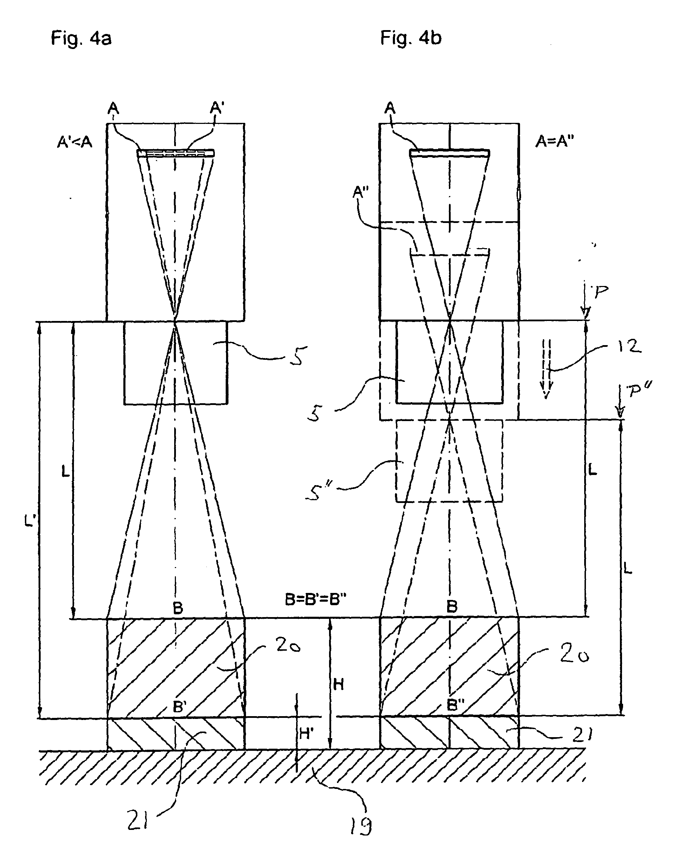

- Figur 4 b: die optischen Verhältnisse bei einer erfindungsgemäßen Vorrichtung,

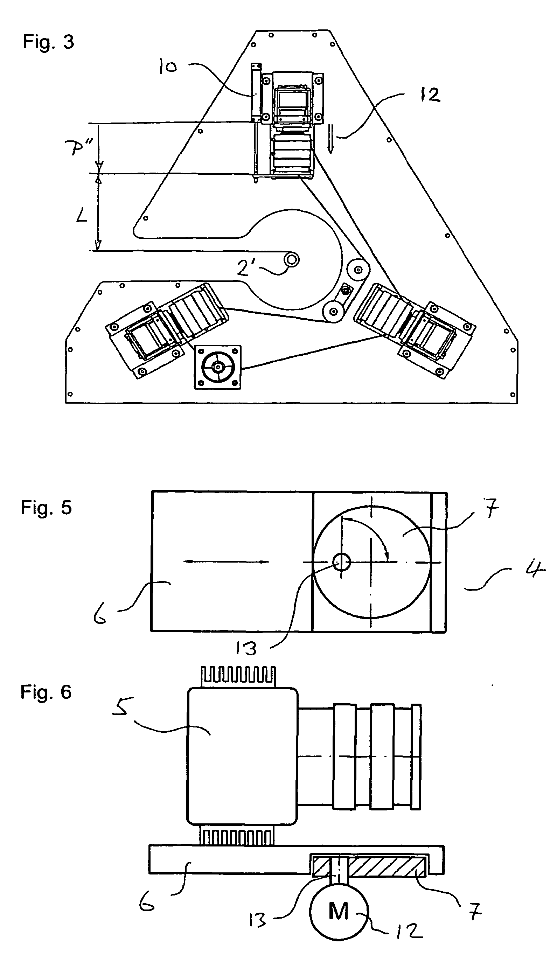

- Figur 5: die Funktionsweise einer Vorrichtung zum Verschieben einer Kamera,
- Figur 6: die in der Figur 5 gezeigte Vorrichtung in Seitenansicht,

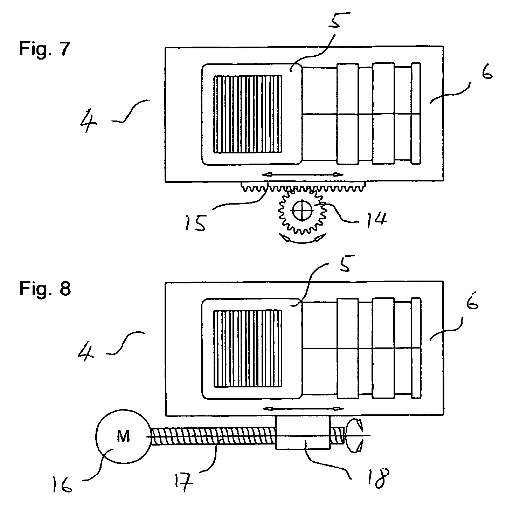

- Figur 7: eine alternative Ausführungsform für eine Vorrichtung zum Verschieben einer Kamera und
- Figur 8: eine dritte Vorrichtung zum Verschieben einer Kamera.

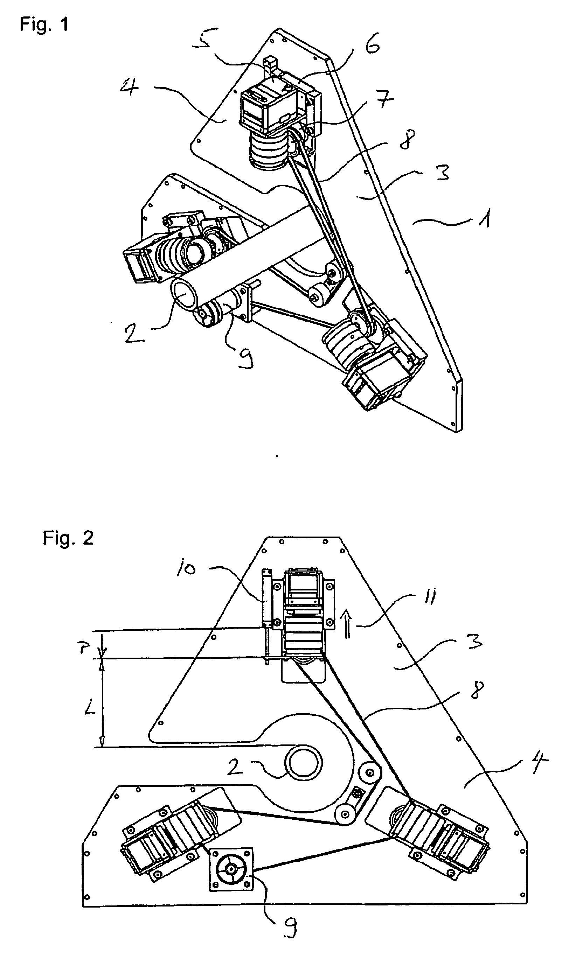

Unter Bezug auf die Figuren 1 bis 3 ist ersichtlich, dass die hier gezeigte, beispielhafte und ein bevorzugte Ausführungsform darstellende erfindungsgemäße Vorrichtung 1 eine Basisplatte 3 aufweist, welche alle für die Vermessung beziehungsweise Prüfung erforderlichen Elemente trägt.

Diese Basisplatte 3 stellt die gemeinsame Halteeinrichtung für drei Kamerasysteme 4 dar. In der Mitte dieser in etwa in Aufsicht dreiecksförmigen Basisplatte 3 befindet sich eine in etwa kreisförmige Ausnehmung 19, die zum Rand der Basisplatte 3 hin mittels eines Kanals 22 offen ist. Dadurch ist es möglich, die Basisplatte 3 derart auf das vermessende und prüfende Längsprodukt, hier ein Rohr 2, 2', aufzuschieben, dass das Rohr 2, 2' zentrisch und mittig zwischen den Kamerasystemen 4 angeordnet ist, worauf nachstehend noch näher eingegangen wird.

Die Kamerasysteme 4 sind gleichmäßig verteilt auf dem Umfang eines nicht gezeigten Kreises angeordnet und zeigen mit ihrem Objektiv zum Rohr 2, 2'. Der Mittelpunkt dieses virtuellen Kreises stellt das Zentrum 23 der Vorrichtung 1 dar und fällt mit der Längsmittelachse des Rohres 2, 2' zusammen, wenn sich das Rohr 2, 2' in der gewünschten Messposition befindet.

Die Vorrichtung 1 wird üblicherweise in eine Produktionslinie eingebaut. Das Rohr 2, 2' wird kontinuierlich optisch vermessen und auf etwaige Fehler geprüft.

Bei den zu messenden Parametern handelt es sich beispielsweise um den Durchmesser und um die Oberflächenqualität. Vermessen werden dabei beispielsweise optisch erkennbare Form- und Farbfehler wie Dellen, Buckel, Risse, Löcher, Verunreinigungen, Schlieren, Kratzer, Fremdkörper und anderes mehr. Die zu vermessenden Rohre 2, 2' können aus allen denkbaren Materialien hergestellt sein, beispielsweise Kunststoff, Metall, Glas und Holz.

Bei der in den Figuren dargestellten Vorrichtung 1 wird die Messung mit insgesamt drei Kamerasystemen 4 durchgeführt. Allerdings ist es auch möglich, nur eines dieser Kamerasysteme 4 zum Einsatz zu bringen, wenn nur bestimmte Parameter gemessen werden sollen.

Zu einem derartigen Kamerasystem 4 gehört die eigentliche Kamera 5, die auf einem beweglichen Schlitten 6 montiert ist. Dieser Schlitten 6 ist in Radialrichtung und somit in Richtung auf die Längsachse des Rohres 2, 2' verschiebbar. Um diese Verschiebung zu bewirken, können verschiedenartig ausgebildete Vorrichtungen eingesetzt werden. Bei der in den Figuren 1 bis 3 gezeigten Ausführungsform dient dazu ein Exzenter 7. Dieser Exzenter 7 kann entweder direkt durch einen Motor 9 angetrieben werden. Für ein Rundumkontrolle des gezeigten Rohres 2, 2' können jedoch auch mehrere Kamerasysteme 4 mit Hilfe eines Zahnriemens 8, der mit allen Exzentern 7 im Eingriff ist, gleichzeitig verschoben werden. Darauf wird nachstehend unter Bezug auf die Figur 5 bis 9 noch näher eingegangen.

In der Figur 2 ist die erfindungsgemäße Vorrichtung 1 in der "hinteren" Stellung P dargestellt. Alle drei Kameras 5 sind radial vom Zentrum der Vorrichtung (= Mittelpunkt des genannten Kreises) in die radial äußere Position 11 verschoben. In dieser Stellung P ist die erfindungsgemäße Vorrichtung 1 optimal für das größtmögliche Rohr 2 auf den fokussierten Abstand L eingestellt, sodass die zu prüfende Oberfläche scharf in der Kamera abgebildet wird. Die Stellung P der Kameras 5 kann mit Hilfe von Weggeberpotentiometern 10 gemessen und bestimmt werden.

Bei der in der Figur 3 wiedergegebenen Darstellung befindet sich die erfindungsgemäße Vorrichtung 1 in der "vorderen" Stellung P". Die Kameras 5 sind somit nach vorne in die radial innere Position 12 verschoben. Mit anderen Worte, die Kameras 5 sind zum Zentrum hin verschoben, sodass die Oberfläche des Rohres 2', das ein kleineres Muster beziehungsweise Rohr darstellt, als das in der Figur 2 dargestellte, größere Rohr beziehungsweise Muster 2, wieder scharf abgebildet wird. Der optimale Abstand L zu den Kameras 5 bleibt somit konstant. Die Stellung P" ist mit den genannten Weggeberpotentiometern 10 bestimmbar.

In der Figur 4a sind die optischen Verhältnisse für eine den Stand der Technik repräsentierende beziehungsweise konventionelle Vorrichtung mit Autofokus-Optik dargestellt, wobei das Scharfstellen durch Verstellen der Linsen erfolgt.

In der Figur 4b wird die erfindungsgemäße Scharfstellung ohne Veränderung der Optik erläutert. Stattdessen wird die ganze Kamera verschoben.

Dieser optische Zusammenhang wird anhand von einer Messung zweier flacher Muster 20 und 21 mit rechteckigem Querschnitt von unterschiedlicher Höhe H und H' erläutert.

Für die Figur 4 a gilt folgendes:

Das Muster 20 mit der Höhe H wird auf dem Sensorchip der Kamera 5 abgebildet. Dabei wird die Breite in B als Länge A abgebildet. Die Optik der Kamera 5 ist auf die Distanz L scharf eingestellt worden.

Für das Muster 21 mit der geringeren Höhe H' muss die Kamera 5 (genauer die Optik davon) auf die neue Distanz L' scharf eingestellt werden. Dadurch verändert sich der Abbildungsmaßstab, sodass die Breite B' der Kamera 5 verkürzt als A' erscheint. Die beiden Breiten B und B' sind im Beispiel identisch gewählt. Dies bedeutet mathematisch ausgedrückt: B' = B woraus sich ergibt: A' > A.

Für die Figur 4b gilt folgendes:

Bei der erfindungsgemäßen Vorrichtung ergeben sich für das große Muster 20 mit der Höhe H dieselben Verhältnisse wie bei der Figur 4 a. Die Kamera 5 ist dabei in der Ausgangsstellung bzw. hinteren Stellung P. Die Breite B wird in der entsprechenden Länge A abgebildet. Der Abstand L der Oberfläche des Musters 20, 21 entspricht ebenfalls der Scharfstellung in Figur 4a.

Im Gegensatz zu dem in der Figur 4a gezeigten Stand der Technik wird aber für das kleinere Muster 21 die Scharfstellung 12 durch Verschieben der Kamera 5 in die vordere Stellung P" (mit gestrichelten Linien dargestellt) erreicht. Die optischen Verhältnisse mit einem festen Abstand L zum zu vermessenden Objekt bleiben für die Abbildung von B" erhalten. Demzufolge ist die so abgebildete Länge A" ebenso groß wie diejenige der Abbildung A für das Muster B" mit identischer Breite B. Mathematisch ausgedrückt bedeutet dies Folgendes: B" = B woraus sich ergibt: A" = A.

Aus obigen Darlegungen ergibt sich, dass mit einer konventionellen Autofokusvorrichtung der Abbildungsmaßstab für jeden Objektabstand verschieden ist. Somit ist eine maßstabsgetreue Vermessung der Oberfläche des Objektes schlecht möglich. Im Gegensatz dazu bleibt der Abbildungsmaßstab bei der erfindungsgemäßen Vorrichtung 1 eindeutig erhalten, sodass eine präzise Vermessung möglich ist.

In der Figur 5 ist dargestellt, wie ein erfindungsgemäßes Kamerasystem 4 mit einem Exzenter 7 verschoben werden kann. Dieser Exzenter 7 wird über eine Achse 13 angetrieben. Dadurch wird der Schlitten 6, auf dem die Kamera 5 montiert ist, in Längsrichtung beziehungsweise in Radialrichtung verschoben.

Figur 6 zeigt das in der Figur 5 dargestellte Kamerasystem 4 in Seitenansicht, wobei die Kamera 5 mit dem Schlitten 6 fest verbunden ist. Der Motor 12 treibt über die Achse 13 den Exzenter 7 an.

In der Figur 7 ist eine weitere Möglichkeit eines Antriebs des Schlittens mit eine Zahnstange 15 und einem Zahnrad 14 gezeigt.

In der Figur 8 wird der dort gezeigte Schlitten 6 mit der darauf montierten Kamera 5 mit Hilfe einer motorgetriebenen Schnecke 17 angetrieben, welche eine am Schlitten 6 fixierte Mutter 18 in Längsrichtung verschiebt.

Neben den oben gezeigten Möglichkeiten für eine Verschiebung der Kameras 5 beziehungsweise der Schlitten 6, auf denen diese Kameras 5 befestigt sind, ist es erfindungsgemäß auch möglich und bevorzugt, mehrere Kamerasysteme 4 gleichzeitig zu verschieben, beziehungsweise anzutreiben. Eine derartige Ausführungsform ist in den Figuren 1 bis 3 dargestellt. Diese Ausführungsform ist mit einem Motor 9 ausgestattet, der über einen Zahnriemen 8 die drei in den Figuren 1 bis 3 gezeigten Kamerasysteme 4 gleichzeitig in Radialrichtung verschiebt beziehungsweise hin- und herschiebt. Dazu ist der Zahnriemen 8 mit den Exzentern 7 der drei Kamerasysteme 5 im Eingriff.

Die in den Figuren 1 bis 3 gezeigte Vorrichtung mit drei Kamerasystemen 4 dient insbesondere für eine Rundum-Kontrolle eines Rohres 2, 2'.

Es ist natürlich auch möglich, mehrere der beschriebenen Vorrichtungen zur Verschiebung der Kamerasysteme 5 in Richtung auf die Oberfläche des Längsproduktes miteinander zu kombinieren.

### BEZUGSZEICHENLISTE

- 1: Vorrichtung
- 2, 2': Rohr
- 3: Basisplatte
- 4: Kamerasystem
- 5: Kamera
- 6: Schlitten
- 7: Exzenter
- 8: Zahnriemen
- 9: Motor
- 10: Weggeberpotentiometer
- 11: radial äußere Position
- 12: radial innere Position
- 13: Achse
- 14: Zahnrad
- 15: Zahnstange
- 16: Motor
- 17: motorgetriebene Schnecke
- 18: Mutter
- 19: Ausnehmung
- 20: Großes Muster
- 21: Kleineres Muster
- 22: Kanal

## Patentansprüche

1. Vorrichtung (1) zum optischen Vermessen und/oder Prüfen von in ihrer Längsrichtung vorwärts bewegten Längsprodukten (2, 2') mit mehreren Kameras (5), die zur Scharfstellung der Abbildung in Richtung auf die Oberfläche des Längsprodukts (2, 2') verschiebbar sind, wobei die Kameras (5)
einen festen Fokus besitzen,
in einer zur Längsrichtung senkrechten Ebene derart verteilt angeordnet sind, dass die Kameras (5) den gleichen Abstand zu dem zu vermessenden Längsprodukt (2,2') besitzen, und
mittels einer Vorrichtung (6, 7, 8, 9) gemeinsam und gleichzeitig um die gleiche Wegstrecke verschiebbar sind, und
das Zentrum (23) der Vorrichtung (1) in dieser Ebene liegt,
**dadurch gekennzeichnet, dass**
die Kameras (5) auf einem Kreis, auf einem Oval oder auf einer anderen, in der senkrechten Ebene liegenden sowie in sich geschlossenen Figur um die Längsrichtung verteilt angeordnet sind.

2. Vorrichtung nach Anspruch 1,
**dadurch gekennzeichnet,**
**dass** die Kameras (5) gleichmäßig verteilt um die Längsrichtung angeordnet sind.

3. Vorrichtung nach Anspruch 1 oder 2,
**dadurch gekennzeichnet,**
**dass** die Kameras (5) zur Vermessung von Produkten mit unrundem Querschnitt zusätzlich einzeln verschoben werden und in der gewünschten Verschiebeposition ortsfest fixiert werden können.

4. Vorrichtung nach Anspruch 1 oder 2,
**dadurch gekennzeichnet, dass**
die Kameras (5) auf einem Kreis angeordnet sind, der um die Längsachse umläuft, und der Mittelpunkt des Kreises (5) mit dem Zentrum (23) der Vorrichtung (1) zusammenfällt.

5. Vorrichtung nach einem der vorhergehenden Ansprüche,
**dadurch gekennzeichnet, dass**
jede Kamera (5) auf je einem beweglichen Schlitten (6) angeordnet ist.

6. Vorrichtung nach einem der vorhergehenden Ansprüche,
**dadurch gekennzeichnet, dass**
die Kameras (5) senkrecht in Richtung auf die Oberfläche des zu vermessenden Längsproduktes (2, 2') und im Falle von runden Längsprodukten (2, 2') in Radialrichtung auf die Längsachse das Längsprodukt (2, 2') verschiebbar sind.

7. Vorrichtung nach einem der vorhergehenden Ansprüche,
**dadurch gekennzeichnet, dass**
die Kameras (5) auf einer gemeinsamen Halteeinrichtung (3), verschiebbar montiert sind.

8. Vorrichtung nach Anspruch 7,
**dadurch gekennzeichnet, dass**
die Kameras (5) auf einer planen Fläche der Halteeinrichtung (3) verschiebbar montiert sind.

9. Verfahren zum optischen Vermessen und/oder Prüfen von in ihrer Längsrichtung vorwärts bewegten Längsprodukten mit mehreren Kameras mit Scharfstellung der Abbildung, bei dem
- Kameras eingesetzt werden, die einen festen Fokus besitzen, die in einer zur Längsrichtung senkrechten Ebene derart verteilt angeordnet sind, dass die Kameras den gleichen Abstand zu dem zu vermessenden Längsprodukt besitzen, und die auf einem Kreis, einem Oval oder einer anderen, auf der senkrechten Ebene liegenden sowie in sich geschlossenen Figur um die Längsrichtung verteilt angeordnet sind,
- vor der Vermessung bzw. Prüfung alle Kameras gemeinsam und gleichzeitig um die gleiche Wegstrecke auf denjenigen Abstand zu der Oberfläche des zu vermessenden Längsproduktes in Richtung auf die Oberfläche des Längsproduktes verschoben werden, bei dem das Längsprodukt in den Kameras scharf abgebildet wird, und
- dann die Vermessung bzw. Prüfung durchgeführt wird.

## Claims

1. A device (1) for optically measuring and/or testing oblong products (2, 2') moved forward in their longitudinal direction using a plurality of cameras (5) which are displaceable toward the surface of the oblong products (2, 2') to focus in on the image, wherein
the cameras (5)
have a fixed focus,
are arranged in a distributed manner in a plane perpendicular to the longitudinal direction such that the cameras (5) are at the same spacing from the oblong product (2, 2') to be measured, and
are jointly and simultaneously displaceable by the same distance by means of a device (6, 7, 8, 9), and
the center (23) of the device (1) is located in said plane,
**characterized in that**
the cameras (5) are arranged on a circle, an oval or another closed figure situated in the perpendicular plane so as to be distributed over the longitudinal direction.

2. The device according to claim 1,
**characterized in that**
the cameras (5) are evenly distributed over the longitudinal direction.

3. The device according to claim 1 or 2,
**characterized in that**,
for measuring products of non-circular cross-section, the cameras (5) can in addition be individually displaced and fixed so as to be stationary in the desired position of displacement.

4. The device according to claim 1 or 2,
**characterized in that**
the cameras (5) are arranged in a circle which runs around the longitudinal axis and the center point of the circle (5) is congruent with the center (23) of the device (1).

5. The device according to any one of the preceding claims,
**characterized in that**
each camera (5) is arranged on a respective movable slide (6).

6. The device according to any one of the preceding claims,
**characterized in that**
the cameras (5) are displaceable in the direction perpendicular to the surface of the oblong product (2, 2') to be measured, and in the case of circular oblong products (2, 2') are displaceable in the radial direction to the longitudinal axis of the oblong product (2, 2').

7. The device according to any one of the preceding claims,
**characterized in that**
the cameras (5) are mounted on a common holding means (3) so as to be displaceable.

8. The device according to claim 7,
**characterized in that**
the cameras (5) are mounted on a planar surface of the holding means (3) so as to be displaceable.

9. A method for optically measuring and/or testing oblong products moved forward in their longitudinal direction using a plurality of cameras (5) including focusing in on the image, in which
- cameras are used which have a fixed focus, are arranged in a distributed manner in a plane perpendicular to the longitudinal direction such that the cameras are at the same spacing from the oblong product to be measured, and are arranged in a circle, an oval or another closed figure situated in the perpendicular plane so as to be distributed over the longitudinal direction,
- prior to measuring and/or testing, all of the cameras are jointly and simultaneously displaced by the same distance toward the surface of the oblong product to be measured to a spacing from the surface of said oblong product at which the oblong product is imaged in sharp focus in the cameras, and
- the measuring and/or testing are/is then subsequently performed.

## Revendications

1. Dispositif (1) de mesure et/ou de contrôle optique de produits longitudinaux (2, 2') avançant dans le sens de leur longueur moyennant plusieurs caméras (5) translatables en direction de la surface du produit longitudinal (2, 2') pour le réglage de netteté de l'image, sachant que les caméras (5)
possèdent une focale fixe,
sont disposées de façon répartie dans un plan perpendiculaire au sens de la longueur de telle manière que les caméras (5) présentent la même distance par rapport au produit longitudinal (2, 2') à mesurer, et
sont translatables conjointement et simultanément sur la même course moyennant un dispositif (6, 7, 8, 9), et
le centre (23) du dispositif (1) est situé dans ce plan,
**caractérisé en ce que**
les caméras (5) sont disposées de façon répartie autour du sens de la longueur sur un cercle, sur un ovale ou sur une autre figure fermée sur elle-même et située dans le plan perpendiculaire.

2. Dispositif selon la revendication 1,
**caractérisé en ce que**
les caméras (5) sont disposées de façon également répartie autour du sens de la longueur.

3. Dispositif selon la revendication 1 ou 2,
**caractérisé en ce que**
les caméras (5), pour la mesure de produits de section transversale non ronde, peuvent en plus être translatées individuellement et arrêtées fixement dans la position de translation souhaitée.

4. Dispositif selon la revendication 1 ou 2,
**caractérisé en ce que**
les caméras (5) sont disposées sur un cercle qui tourne autour de l'axe de la longueur, et le point médian du cercle (5) concorde avec le centre (23) du dispositif (1).

5. Dispositif selon l'une des revendications précédentes,
**caractérisé en ce que**
chaque caméra (5) est disposée respectivement sur un coulisseau mobile (6).

6. Dispositif selon l'une des revendications précédentes,
**caractérisé en ce que**
les caméras (5) sont translatables perpendiculairement en direction de la surface du produit longitudinal (2, 2') à mesurer et, dans le cas de produits longitudinaux (2, 2') ronds, en sens radial vers l'axe de longueur du produit longitudinal (2, 2').

7. Dispositif selon l'une des revendications précédentes,
**caractérisé en ce que**
les caméras (5) sont montées de façon translatable sur un élément de maintien commun (3).

8. Dispositif selon la revendication 7,
**caractérisé en ce que**
les caméras (5) sont montées de façon translatable sur une surface plane de l'élément de maintien (3).

9. Procédé de mesure et/ou de contrôle optique de produits longitudinaux avançant dans le sens de leur longueur moyennant plusieurs caméras avec réglage de netteté de l'image, où
- sont utilisées des caméras qui possèdent une focale fixe, qui sont disposées de façon répartie dans un plan perpendiculaire au sens de la longueur de telle manière que les caméras présentent la même distance par rapport au produit longitudinal à mesurer, et qui sont disposées de façon répartie autour du sens de la longueur sur un cercle, un ovale ou une autre figure fermée sur elle-même et située dans le plan perpendiculaire,
- avant la mesure et/ou le contrôle, toutes les caméras sont translatées conjointement et simultanément sur la même course en direction de la surface du produit à mesurer à ladite distance par rapport à la surface du produit longitudinal à mesurer, le produit longitudinal étant représenté de manière nette dans les caméras, et
- la mesure et/ou le contrôle étant alors effectué(s).
